# FASCICULE DE BREVET EUROPEEN

(11) **EP 4 359 236 B1**
(45) Date de publication et mention de la délivrance du brevet: **22.07.2026**
(21) Numéro de dépôt: 22722861.6
(22) Date de dépôt: 19.04.2022
(51) Int. Cl.: B60H 1/00, B60H 1/22, H01M 10/625, B60K 1/00

(54) **SYSTEME DE GESTION THERMIQUE D'ELEMENTS D'UN VEHICULE**
SYSTEM ZUR WÄRMEVERWALTUNG VON TEILEN EINES FAHRZEUGS
SYSTEM FOR THE THERMAL MANAGEMENT OF PARTS OF A VEHICLE

(30) Priorité: 21.06.2021 FR 2106538
(43) Date de publication de la demande: 01.05.2024
(73) Titulaire: Stellantis Auto SAS, 78300 Poissy (FR)
(72) Inventeur: BALENGHIEN, Olivier, 93390 CLICHY SOUS BOIS (FR); DE CROUTTE, Arnaud, 78530 BUC (FR)
(74) Mandataire: PSIP
(86) Numéro de dépôt international: PCT/FR2022/050730
(87) Numéro de publication internationale: WO 2022/269144

(56) Documents cités:
- EP-A1- 3 763 556
- CN-A- 112 519 562
- CN-B- 106 585 414
- DE-A1- 102012 108 043
- DE-A1- 102017 125 170
- US-A1- 2021 080 027

## Description

La présente invention revendique la priorité de la demande française N°2106538 déposée le 21.06.2021 dont le contenu (texte, dessins et revendications) est ici incorporé par référence.

Un aspect de l'invention se rapporte à un système de gestion thermique d'éléments d'un véhicule au moyen d'un fluide caloporteur. Un autre aspect de l'invention porte sur un procédé de pilotage d'un système de gestion thermique d'éléments d'un véhicule au moyen d'un fluide caloporteur. Le domaine de l'invention est ainsi celui de la gestion thermique des éléments d'un véhicule, notamment électrique.

Les véhicules électriques comportent habituellement un circuit de gestion thermique d'un moyen de stockage d'énergie électrique, telle une batterie électrique 400V. Ce type de circuit comporte une pompe pour la circulation d'un fluide caloporteur dans le circuit ainsi qu'un dispositif pour chauffer le fluide caloporteur et un dispositif pour refroidir le fluide caloporteur circulant dans le circuit. Le fluide caloporteur ainsi chauffé ou refroidit est utilisé pour réguler la température de la batterie électrique 400V.

Les véhicules électriques comportent en outre un circuit de gestion thermique d'un aérotherme pour réguler la température de l'habitacle. Ce type de circuit comporte usuellement une pompe pour la circulation d'un fluide caloporteur dans le circuit ainsi qu'un dispositif pour chauffer le fluide caloporteur et un dispositif pour refroidir le fluide caloporteur circulant dans le circuit. Le fluide caloporteur ainsi chauffé ou refroidit est utilisé pour réguler la température de l'aérotherme et par voie de conséquence l'habitacle.

Les véhicules électriques comportent également un circuit de gestion thermique d'une machine électrique tournante, telle une machine de traction. Ce type de circuit comporte une pompe pour la circulation d'un fluide caloporteur dans le circuit ainsi qu'un radiateur pour refroidir le fluide caloporteur circulant dans le circuit. Le fluide caloporteur ainsi refroidit est utilisé pour réguler la température de la machine électrique tournante.

Il convient de noter que ces trois circuits sont utilisés de manière indépendante et consomment chacun beaucoup d'énergie électrique pour diminuer ou augmenter la température du fluide caloporteur. Une telle consommation importante d'énergie électrique impacte nécessairement l'autonomie de roulage du véhicule électrique.

On connait du document de brevet US-A1-2021080027 un système conforme au préambule de la revendication 1.

Le but de l'invention est de pallier les inconvénients de l'art antérieur en proposant notamment un système de gestion thermique d'éléments d'un véhicule au moyen d'un fluide caloporteur permettant d'optimiser la consommation électrique utilisée notamment pour augmenter la température du fluide caloporteur.

Dans ce contexte, l'invention se rapporte ainsi, dans son acceptation la plus large, à un système de gestion thermique d'éléments d'un véhicule au moyen d'un fluide caloporteur, le système comportant :
- un premier circuit de gestion thermique d'un moyen de stockage d'énergie électrique comportant :
   - une première pompe pour la circulation du fluide caloporteur dans le premier circuit,
   - un moyen de stockage d'énergie électrique,
- un deuxième circuit de gestion thermique d'un aérotherme pour réguler la température d'un habitacle comportant:
   - une deuxième pompe pour la circulation du fluide caloporteur dans le deuxième circuit,
   - un dispositif de chauffage du fluide caloporteur,
   - un aérotherme,
- des moyens de connexion fluidique du premier circuit avec le deuxième circuit,
- des moyens de pilotage agencés pour :
   - connecter les premier et deuxième circuits via les moyens de connexion fluidique,
   - activer la première pompe et la deuxième pompe,
   - activer le dispositif de chauffage pour chauffer le fluide caloporteur circulant dans les premier et deuxième circuits connectés.

Grâce à cet aspect de l'invention, il est possible de fusionner via les moyens de connexion fluidique deux circuits de sorte qu'un unique dispositif de chauffage est utilisé pour chauffer le fluide caloporteur utilisé pour augmenter la température du moyen de stockage d'énergie électrique et également pour augmenter la température de l'habitacle via l'aérotherme. Comme un unique dispositif de chauffage est utilisé, la consommation électrique pour réguler la température de la batterie et de l'habitacle est optimisée.

En outre, comme un dispositif de chauffage, à savoir celui présent habituellement pour augmenter la température du circuit de gestion thermique du moyen de stockage d'énergie électrique, est supprimé, le coût des deux circuits est diminué.

Outre les caractéristiques qui viennent d'être évoquées dans le paragraphe précédent, le système selon cet aspect de l'invention peut présenter une ou plusieurs caractéristiques complémentaires parmi les suivantes, considérées individuellement ou selon toutes les combinaisons techniquement possibles.

Selon un aspect non limitatif de l'invention, le système comporte en outre un troisième circuit de gestion thermique d'une machine électrique tournante, le troisième circuit comportant :
- une machine électrique tournante,
- une troisième pompe pour la circulation du fluide caloporteur dans le troisième circuit,
- un radiateur pour refroidir le fluide caloporteur,

- les moyens de connexion fluidique étant en outre agencés pour connecter le troisième circuit avec le premier circuit ou le deuxième circuit.

Selon un aspect non limitatif de l'invention, les moyens de pilotage sont agencés pour :
- connecter le premier circuit avec le troisième circuit via les moyens de connexion fluidique ;
- activer la première pompe et la troisième pompe de sorte à refroidir le fluide caloporteur circulant dans le premier circuit et le troisième circuit au moyen du radiateur.

Selon un aspect non limitatif de l'invention, les moyens de pilotage sont agencés pour:
- connecter le premier circuit avec le troisième circuit via les moyens de connexion fluidique,
- désactiver la troisième pompe de sorte à interdire un passage du fluide caloporteur dans le radiateur, et
- activer la première pompe de sorte à chauffer le fluide caloporteur circulant dans le premier circuit au moyen d'une récupération de pertes joules de la machine électrique tournante.

Selon un aspect non limitatif de l'invention, les moyens de pilotage sont agencés pour :
- connecter le deuxième circuit avec le troisième circuit via les moyens de connexion fluidique,
- activer la deuxième pompe et la troisième pompe de sorte à refroidir le fluide caloporteur circulant dans le deuxième circuit et le troisième circuit au moyen du radiateur.

Selon un aspect non limitatif de l'invention, les moyens de pilotage sont agencés pour isoler le premier circuit, le deuxième circuit et le troisième circuit les uns des autres via les moyens de connexion fluidiques.

Selon un autre aspect non limitatif, l'invention se rapporte à un procédé de pilotage d'un système de gestion thermique d'un véhicule au moyen d'un fluide caloporteur selon l'un des aspects précités, le procédé comportant les étapes pilotées par les moyens de pilotage de, lorsque le véhicule est à l'arrêt et que la température du moyen de stockage d'énergie électrique est en deçà d'une température minimale seuil,
- connecter le premier circuit avec le deuxième circuit via les moyens de connexion fluidique,
- activer les première et deuxième pompes, et
- activer le dispositif de chauffage pour chauffer le fluide caloporteur circulant dans les premier et deuxième circuits connectés.

Selon un aspect non limitatif de l'invention, le procédé comporte les étapes de, lorsque le véhicule est en mouvement et que la température du moyen de stockage d'énergie électrique est au delà d'une température maximale seuil :
- connecter le premier circuit avec le troisième circuit via les moyens de connexion fluidique,
- activer la première pompe et la troisième pompe de sorte à refroidir le fluide caloporteur circulant dans le premier circuit et le troisième circuit au moyen du radiateur.

Selon un aspect non limitatif de l'invention, le procédé comporte les étapes de, lorsque le véhicule est en mouvement et que la température du moyen de stockage d'énergie électrique est en deçà d'une température seuil :
- connecter le premier circuit avec le troisième circuit via les moyens de connexion fluidique,
- désactiver la troisième pompe de sorte à interdire un passage du fluide caloporteur dans le radiateur, et
- activer la première pompe de sorte à chauffer le fluide caloporteur circulant dans le premier circuit au moyen d'une récupération de pertes joules de la machine électrique tournante.

Selon un aspect non limitatif de l'invention, le procédé comporte les étapes pilotées par les moyens de pilotage de, lorsque l'écart de température entre l'habitacle et l'extérieur du véhicule est supérieure à un écart de température seuil :
- connecter le deuxième circuit avec le troisième circuit via les moyens de connexion fluidique,
- activer la deuxième pompe et la troisième pompe de sorte à refroidir le fluide caloporteur circulant dans le deuxième circuit et le troisième circuit au moyen du radiateur.

L'invention et ses différentes applications seront mieux comprises à la lecture de la description qui suit et à l'examen des figures qui l'accompagnent.
[Fig. 1] illustre de façon schématique un système de gestion thermique d'éléments d'un véhicule selon un aspect de l'invention.
[Fig. 2] représente de façon schématique un système de gestion thermique d'éléments d'un véhicule selon un autre aspect de l'invention.
[Fig. 3] représente de façon schématique un système de gestion thermique d'éléments d'un véhicule selon un autre aspect de l'invention.
[Fig. 4] représente de façon schématique un système de gestion thermique d'éléments d'un véhicule selon un autre aspect de l'invention.
[Fig. 5] représente de façon schématique un système de gestion thermique d'éléments d'un véhicule selon un autre aspect de l'invention.
[Fig. 6] représente de façon schématique un diagramme d'étapes d'un procédé de pilotage d'un système de gestion thermique d'éléments d'un véhicule selon un aspect de l'invention.

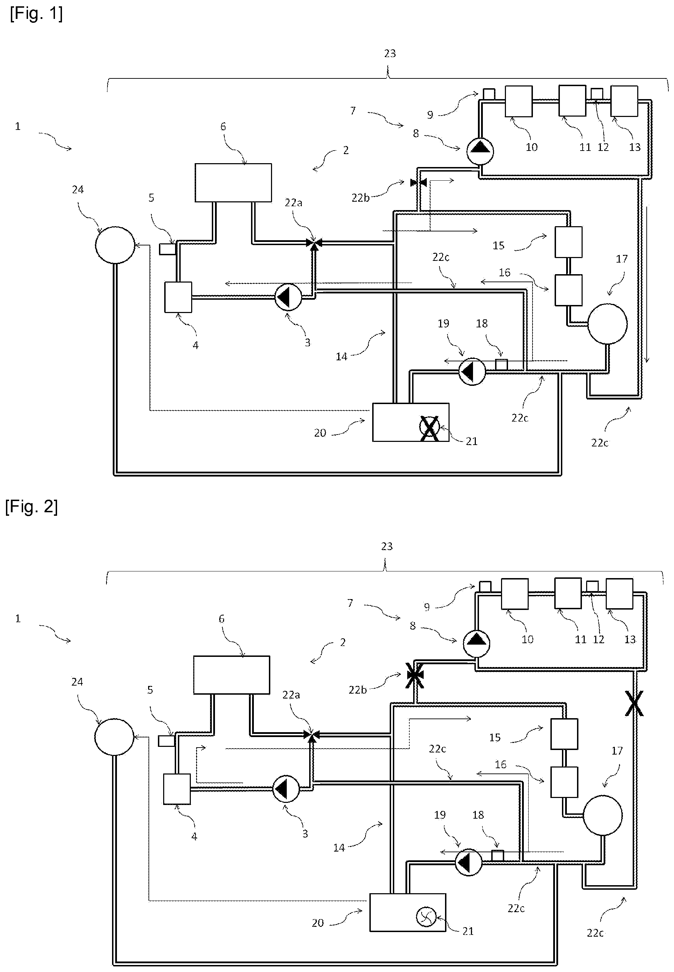

La figure 1 illustre un système 1 de gestion thermique d'éléments d'un véhicule au moyen d'un fluide caloporteur.

Le système 1 comporte un premier circuit 2 de gestion thermique d'un moyen de stockage d'énergie électrique, par exemple une batterie 400V.

Le premier circuit 2 comporte en série:
- une première pompe 3 pour la circulation du fluide caloporteur dans le premier circuit 2,
- un premier dispositif de refroidissement 4 du fluide caloporteur circulant dans le premier circuit 2, ce premier dispositif de refroidissement 4 pouvant être formé par un échangeur de fluide caloporteur/réfrigérant issu d'un compresseur de climatisation non illustré permettant d'abaisser la température du fluide caloporteur. Ce type de premier dispositif de refroidissement 4 est également connu sous le terme Chiller,

- une première sonde de température 5 pour mesurer la température du fluide caloporteur circulant dans le premier circuit 2, et
- un moyen de stockage d'énergie électrique 6.

Le système 1 comporte un deuxième circuit 7 de gestion thermique d'un aérotherme pour réguler la température d'un habitacle.

Le deuxième circuit 7 comporte en série:
- une deuxième pompe 8 pour la circulation du fluide caloporteur dans le deuxième circuit 7,
- une deuxième sonde de température 9 pour mesurer la température du fluide caloporteur sortant de la deuxième pompe 8,
- un deuxième dispositif de refroidissement 10 du fluide caloporteur circulant dans le deuxième circuit 7, ce deuxième dispositif de refroidissement 10 pouvant être formé par un échangeur de fluide caloporteur/réfrigérant issu d'un compresseur de climatisation non illustré permettant d'abaisser la température du fluide caloporteur. Ce type de deuxième dispositif de refroidissement 10 est également connu sous le terme condenseur,
- un dispositif de chauffage 11 du fluide caloporteur, ce dispositif de chauffage 11 peut être formé par une résistance chauffante,
- une troisième sonde de température 12 pour mesurer la température du fluide caloporteur sortant du dispositif de chauffage 11,
- un aérotherme 13 formé par un échangeur de fluide caloporteur/air utilisé pour augmenter ou diminuer la température de l'habitacle.

Le système 1 comporte en outre un troisième circuit 14 de gestion thermique d'une machine électrique tournante.

Le troisième circuit 14 comporte en série:
- un convertisseur de type OBC DC-DC 15,
- un onduleur 16,
- une machine électrique tournante 17,
- une quatrième sonde de température 18 pour mesurer la température du fluide caloporteur circulant dans le troisième circuit 14,
- une troisième pompe 19 pour la circulation du fluide caloporteur dans le troisième circuit 14,
- un radiateur 20 muni d'un groupe moto-ventilateur 21 pour refroidir le fluide caloporteur circulant dans le troisième circuit 14.

Le système 1 comporte également des moyens de connexion fluidique 22a, 22b, 22c agencés pour :
- connecter le premier circuit 2 avec le deuxième circuit 7, et pour
- connecter le troisième circuit 14 avec le premier circuit 2 ou le deuxième circuit 7.

A cette fin, les moyens de connexion fluidique sont formés par une première électrovanne trois voies 22a qui permet, selon qu'elle soit ouverte ou fermée, d'autoriser ou d'interdire la circulation du fluide caloporteur entre le premier circuit 2 et le troisième circuit 14.

Les moyens de connexion fluidique 22 comportent en outre une deuxième électrovanne deux voies 22b qui permet d'autoriser ou d'interdire, selon qu'elle soit ouverte ou fermée, la circulation du fluide caloporteur entre le troisième circuit 14 et le deuxième circuit 7.

Les moyens de connexion fluidique 22 comportent en outre un circuit de connexion 22c reliant une partie du deuxième circuit 7 située en aval de l'aérotherme 13 avec une partie du premier circuit 2 située en amont de la première pompe 3.

Le système 1 comporte en outre des moyens de pilotage 23 agencés pour :
- connecter les premier et deuxième circuits 2,7 en ouvrant la première électrovanne trois voies 22a et la deuxième électrovanne deux voies 22b,
- activer la première pompe 3, la deuxième pompe 8 et la troisième pompe 19,
- activer le dispositif de chauffage 11 pour chauffer le fluide caloporteur circulant dans les premier et deuxième circuits 2,7 connectés,
- désactiver le groupe moto ventilateur 21 du radiateur 20.

Le système 1 comporte en outre un réservoir d'expansion 24 contenant le liquide caloporteur.

Ainsi, en fonctionnement, le fluide caloporteur du système 1 est chauffé par le dispositif de chauffage 11 du deuxième circuit 7. Le fluide caloporteur chauffé circule dans le deuxième circuit 7 puis rejoint le premier circuit 2 en passant dans le circuit de connexion 22c reliant la partie du deuxième circuit 7 située en aval de l'aérotherme 13 avec la partie du premier circuit 2 située en amont de la première pompe 3. Après son passage dans le moyen de stockage d'énergie électrique 6, le fluide caloporteur passe au travers de la première électrovanne trois voies 22a, puis de la deuxième électrovanne deux voies 22b pour rejoindre le dispositif de chauffage 11 et être chauffé à nouveau.

En outre, comme la troisième pompe 19 du troisième circuit 14 peut être activée de manière à refroidir la machine électrique tournante 17 du troisième circuit 14, le groupe moto-ventilateur 21 du radiateur 20 est inhibé pour éviter de refroidir trop fortement le fluide caloporteur chauffé circulant dans la partie du circuit de connexion 22c partagée avec le fluide caloporteur chauffé.

Dans une mise en œuvre complémentaire illustrée à la figure 2, les moyens de pilotage 23 peuvent en outre être agencés pour :
- connecter le premier circuit 2 avec le troisième circuit 14 en ouvrant la première électrovanne trois voies 22a et en fermant la deuxième électrovanne deux voies 22b, et
- activer la première pompe 3 et la troisième pompe 19 de sorte à refroidir le fluide caloporteur circulant dans le premier circuit 2 et le troisième circuit 14 au moyen du radiateur 20.

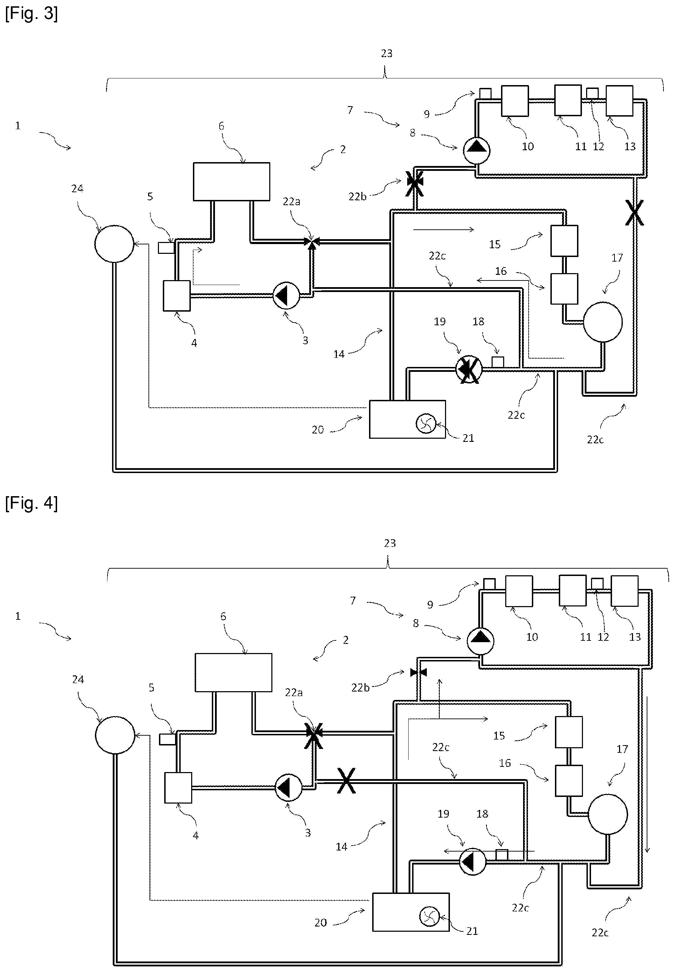

Dans une mise en œuvre complémentaire illustrée à la figure 3, les moyens de pilotage 23 peuvent en outre être agencés pour :
- connecter le premier circuit 2 avec le troisième circuit 14 en ouvrant la première électrovanne trois voies 22a et en fermant la deuxième électrovanne 22b, et
- désactiver la troisième pompe 19 de sorte à interdire un passage du fluide caloporteur dans le radiateur 20, et
- activer la première pompe 3 de sorte à chauffer le fluide caloporteur circulant dans le premier circuit 2 au moyen d'une récupération de pertes joules de la machine électrique tournante 17.

Dans une mise en œuvre complémentaire illustrée à la figure 4, les moyens de pilotage 23 peuvent en outre être agencés pour :
- connecter le deuxième circuit 7 avec le troisième circuit 14 en ouvrant la deuxième électrovanne deux voies 22b et en fermant la première électrovanne trois voies 22a, et
- activer la deuxième pompe 8 et la troisième pompe 19 de sorte à refroidir le fluide caloporteur circulant dans le deuxième circuit 7 et le troisième circuit 14 au moyen du radiateur 20.

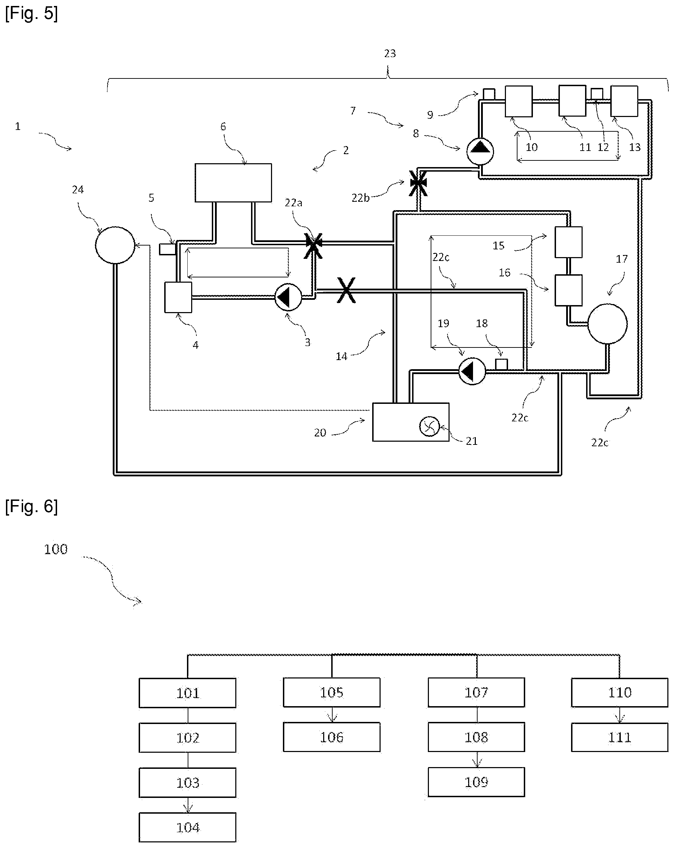

Dans une mise en œuvre complémentaire illustrée à la figure 5, les moyens de pilotage 23 peuvent en outre être agencés pour isoler le premier circuit 2, le deuxième circuit 7 et le troisième circuit 14 les uns des autres en fermant la première électrovanne trois voies 22a ainsi que la deuxième électrovanne deux voies 22b.

La figure 6 montre un diagramme d'étapes d'un mode de mise en œuvre du procédé 100 selon l'invention. Dans une mise en œuvre non limitative, les étapes du procédé 100 sont exécutées par les moyens de pilotage 23 qui peuvent par exemple être formés par une unité de contrôle du véhicule électrique, dite EVCU (pour « Electric Vehicle Control Unit » en anglais).

Selon ce mode de mise en œuvre, lorsque le véhicule est à l'arrêt et que la température du moyen de stockage d'énergie électrique 6 est en deçà d'une température minimale seuil, le procédé 100 comporte les étapes de :
- connecter 101 le premier circuit 2 avec le deuxième circuit 7 via les moyens de connexion fluidique, dans l'exemple illustré à la figure 1 en ouvrant la première électrovanne trois voies 22a et la deuxième électrovanne deux voies 22b,
- activer 102 la première pompe 3, la deuxième pompe 8 et la troisième pompe 19,
- activer 103 le dispositif de chauffage 11 pour chauffer le fluide caloporteur circulant dans les premier et deuxième circuits 2,7 connectés, et
- désactiver 104 le groupe moto ventilateur 21 du radiateur 20.

Ainsi, le fluide caloporteur du système 1 est chauffé par le dispositif de chauffage 11 du deuxième circuit 7. Le fluide caloporteur chauffé circule dans le deuxième circuit 7 puis rejoint le premier circuit 2 en passant dans le circuit de connexion 22c reliant la partie du deuxième circuit 7 située en aval de l'aérotherme 13 avec la partie du premier circuit 2 située en amont de la première pompe 3. Après son passage dans le moyen de stockage d'énergie électrique 6, le fluide caloporteur passe au travers de la première électrovanne trois voies 22a, puis de la deuxième électrovanne deux voies 22b pour rejoindre le dispositif de chauffage 11 et être chauffé à nouveau.

En outre, comme la troisième pompe 19 du troisième circuit 14 est activée de manière à refroidir la machine électrique tournante 17 du troisième circuit 14, le groupe moto-ventilateur 21 du radiateur 20 est inhibé pour éviter de refroidir le fluide caloporteur au niveau de la partie du circuit de connexion 22c partagée avec le fluide caloporteur chauffé.

Lorsque le véhicule est en mouvement et que la température du moyen de stockage d'énergie électrique 6 est au delà d'une température maximale seuil, le procédé 100 comporte les étapes de
- connecter 105 le premier circuit 2 avec le troisième circuit 14 via les moyens de connexion fluidique, dans l'exemple illustré à la figure 2 en ouvrant la première électrovanne trois voies 22a et en fermant la deuxième électrovanne deux voies 22b,
- activer 106 la première pompe 3 et la troisième pompe 19 de sorte à refroidir le fluide caloporteur circulant dans le premier circuit 2 et le troisième circuit 14 au moyen du radiateur 20.

Lorsque le véhicule est en mouvement et que la température du moyen de stockage d'énergie électrique 6 mesurée par la première sonde de température 4 est en deçà d'une température seuil, le procédé 100 comporte les étape de :
- connecter 107 le premier circuit 1 avec le troisième circuit 14 via les moyens de connexion fluidique, dans l'exemple illustré à la figure 3, en ouvrant la première électrovanne trois voies 22a et en fermant la deuxième électrovanne 22b,
- désactiver 108 la troisième pompe 11 de sorte à interdire un passage du fluide caloporteur dans le radiateur 20, et
- activer 109 la première pompe 3 de sorte à chauffer le fluide caloporteur circulant dans le premier circuit 2 au moyen d'une récupération de pertes joules de la machine électrique tournante 17.

Lorsque l'écart de température entre l'habitacle et l'extérieur du véhicule est supérieure à un écart de température seuil, le procédé 100 comporte les étapes de :
- connecter 110 le deuxième circuit 7 avec le troisième circuit 14 via les moyens de connexion fluidique, dans l'exemple illustré à la figure 4, en ouvrant la deuxième électrovanne deux voies 22b et en fermant la première électrovanne trois voies 22a,
- activer 111 la deuxième pompe 8 et la troisième pompe 19 de sorte à refroidir le fluide caloporteur circulant dans le deuxième circuit 7 et le troisième circuit 14 au moyen du radiateur 20.

De façon générale, conformément aux différents aspects de l'invention précités, les fonctionnements les moins énergivores électriquement ont été favorisés pour économiser l'énergie électrique et favoriser l'autonomie des véhicules électriques tout en garantissant le bon fonctionnement et la bonne prestation thermique que les utilisateurs souhaitent.

## Revendications

1. Système (1) de gestion thermique d'éléments d'un véhicule au moyen d'un fluide caloporteur, ledit système (1) comportant :
- un premier circuit (2) de gestion thermique d'un moyen de stockage d'énergie électrique comportant :
∘ une première pompe (3) pour la circulation dudit fluide caloporteur dans ledit premier circuit (2),
∘ un moyen de stockage d'énergie électrique (6),
- un deuxième circuit (7) de gestion thermique d'un aérotherme pour réguler la température d'un habitacle comportant:
∘ une deuxième pompe (8) pour la circulation dudit fluide caloporteur dans ledit deuxième circuit (7),
∘ un dispositif de chauffage (11) dudit fluide caloporteur,
∘ un aérotherme (13),
- un troisième circuit (14) de gestion thermique d'une machine électrique tournante, ledit troisième circuit (14) comportant :
∘ une machine électrique tournante (17),
∘ une troisième pompe (19) pour la circulation dudit fluide caloporteur dans ledit troisième circuit (14),
∘ un radiateur (20) pour refroidir ledit fluide caloporteur,
- des moyens de connexion fluidique (22a, 22b, 22c) dudit premier circuit (2) avec ledit deuxième circuit (7), et étant en outre agencés pour connecter ledit troisième circuit (14) avec ledit premier circuit (2) ou ledit deuxième circuit (7),
- des moyens de pilotage (23) agencés pour :
∘ connecter lesdits premier et deuxième circuits (2, 7) via lesdits moyens de connexion fluidique (22a, 22b, 22c),
∘ activer ladite première pompe (3) et ladite deuxième pompe (8),
∘ activer ledit dispositif de chauffage (11) pour chauffer ledit fluide caloporteur circulant dans lesdits premier et deuxième circuits (2, 7) connectés.
**caractérisé en ce que** les moyens de pilotage (23) sont en outre agencés pour :
∘ connecter le premier circuit (2) avec le troisième circuit (14) via les moyens de connexion fluidique (22a, 22c),
∘ désactiver la troisième pompe (19) de sorte à interdire un passage du fluide caloporteur dans le radiateur (20), et
∘ activer la première pompe (3) de sorte à chauffer ledit fluide caloporteur circulant dans ledit premier circuit (2) au moyen d'une récupération de pertes joules de la machine électrique tournante (17).

2. Système (1) selon la revendication 1 **caractérisé en ce que** lesdits moyens de pilotage (23) sont en outre agencés pour :
∘ connecter le premier circuit (2) avec le troisième circuit (14) via les moyens de connexion fluidique (22a, 22c) ;
∘ activer la première pompe (3) et la troisième pompe (19) de sorte à refroidir le fluide caloporteur circulant dans ledit premier circuit (2) et ledit troisième circuit (14) au moyen du radiateur (20).

3. Système (1) selon l'une des revendications précédentes, **caractérisé en ce que** les moyens de pilotage (23) sont en outre agencés pour
∘ connecter le deuxième circuit (7) avec le troisième circuit (14) via les moyens de connexion fluidique (22b, 22c),
∘ activer la deuxième pompe (8) et la troisième pompe (19) de sorte à refroidir le fluide caloporteur circulant dans ledit deuxième circuit (7) et ledit troisième circuit (14) au moyen du radiateur (20).

4. Système (1) selon l'une des revendications précédentes, **caractérisé en ce que** les moyens de pilotage (23) sont agencés en outre pour isoler le premier circuit (2), le deuxième circuit (7) et le troisième circuit (14) les uns des autres via les moyens de connexion fluidique (22a, 22b).

5. Procédé (100) de pilotage d'un système (1) de gestion thermique d'un véhicule au moyen d'un fluide caloporteur selon l'une quelconque des revendications précédentes, ledit procédé (100) comportant les étapes pilotées par les moyens de pilotage (23) de, lorsque le véhicule est à l'arrêt et que la température du moyen de stockage d'énergie électrique (6) est en deçà d'une température minimale seuil,
∘ connecter (101) le premier circuit (2) avec le deuxième circuit (3) via les moyens de connexion fluidique (22a, 22b, 22c),
∘ activer (102) les première et deuxième pompes (3, 8), et
∘ activer (103) le dispositif de chauffage (11) pour chauffer le fluide caloporteur circulant dans lesdits premier et deuxième circuits (2, 7) connectés,
∘ connecter (107) le premier circuit (2) avec le troisième circuit (14) via les moyens de connexion fluidique (22a, 22c),
∘ désactiver (108) la troisième pompe (11) de sorte à interdire un passage du fluide caloporteur dans le radiateur (20), et
∘ activer (109) la première pompe (3) de sorte à chauffer le fluide caloporteur circulant dans le premier circuit (2) au moyen d'une récupération de pertes joules de la machine électrique tournante (17).

6. Procédé (100) selon la revendication 5 comportant les étapes de, lorsque le véhicule est en mouvement et que la température du moyen de stockage d'énergie électrique (6) est au delà d'une température maximale seuil :
∘ connecter (105) le premier circuit (2) avec le troisième circuit (14) via les moyens de connexion fluidique (22a, 22c),
∘ activer (106) la première pompe (3) et la troisième pompe (19) de sorte à refroidir le fluide caloporteur circulant dans le premier circuit (2) et le troisième circuit (14) au moyen du radiateur (20).

7. Procédé (100) selon l'une des revendications 5 et 6, comportant les étapes de, lorsque l'écart de température entre l'habitacle et l'extérieur du véhicule est supérieure à un écart de température seuil :
∘ connecter (110) le deuxième circuit (7) avec le troisième circuit (14) via les moyens de connexion fluidique (22b, 22c),
∘ activer (111) la deuxième pompe (8) et la troisième pompe (19) de sorte à refroidir le fluide caloporteur circulant dans le deuxième circuit (7) et le troisième circuit (14) au moyen du radiateur (20).

## Patentansprüche

1. System (1) zur Wärmemanagement von Bauteilen eines Fahrzeugs mittels eines Wärmeübertragungsmediums, wobei das System (1) folgendes umfasst:
- einer ersten Wärmemanagementschaltung (2) eines elektrischen Energiespeichers, bestehend aus:
∘ eine erste Pumpe (3) zur Zirkulation des Wärmeträgerfluids in dem ersten Kreislauf (2),
∘ einem elektrischen Energiespeicher (6),
- ein zweiter Wärmemanagementkreislauf (7) eines aerothermen Luftfahrzeugs zur Regelung der Temperatur eines Innenraums, bestehend aus:
∘ eine zweite Pumpe (8) zur Zirkulation des Wärmeträgerfluids in dem zweiten Kreislauf (7),
∘ eine Heizvorrichtung (11) für das Wärmeübertragungsmedium,
∘ einem Aerotherm (13),
- einen dritten Wärmemanagementkreis (14) einer rotierenden elektrischen Maschine, wobei der dritte Kreis (14) Folgendes umfasst:
∘ einer rotierenden elektrischen Maschine (17),
∘ eine dritte Pumpe (19) zur Zirkulation des Wärmeträgerfluids in dem dritten Kreislauf (14),
∘ einem Kühler (20) zur Kühlung des Wärmeträgermediums,
- Fluidverbindungsmittel (22a, 22b, 22c) der ersten Schaltung (2) mit der zweiten Schaltung (7) und die ferner angeordnet sind, um die dritte Schaltung (14) mit der ersten Schaltung (2) oder der zweiten Schaltung (7) zu verbinden,
- Steuereinrichtungen (23), die eingerichtet sind für:
∘die erste und die zweite Schaltung (2, 7) über die Fluidverbindungsmittel (22a, 22b, 22c) zu verbinden,
o Aktivierung der ersten Pumpe (3) und der zweiten Pumpe (8),
o Aktivieren der Heizvorrichtung (11) zum Erhitzen des Wärmeträgerfluids, das in den ersten und zweiten verbundenen Stromkreisen (2, 7) zirkuliert.
**dadurch gekennzeichnet, dass** die Steuermittel (23) ferner angeordnet sind für:
∘die erste Schaltung (2) über die Fluidverbindungsmittel (22a, 22c) mit der dritten Schaltung (14) zu verbinden,
∘die dritte Pumpe (19) abschalten, um einen Durchfluss des Wärmeübertragungsmediums durch den Kühler (20) zu verhindern, und
∘Aktivierung der ersten Pumpe (3) zur Erwärmung des im ersten Kreislauf (2) zirkulierenden Wärmeträgerfluids mittels einer Joule-Verlustrückgewinnung der rotierenden elektrischen Maschine (17).

2. System (1) nach Anspruch 1, **dadurch gekennzeichnet, dass** die Steuermittel (23) ferner angeordnet sind für:
∘die erste Schaltung (2) über die Fluidverbindungsmittel (22a, 22c) mit der dritten Schaltung (14) zu verbinden;
∘Aktivierung der ersten Pumpe (3) und der dritten Pumpe (19) zur Kühlung des im ersten Kreislauf (2) und im dritten Kreislauf (14) zirkulierenden Wärmeträgerfluids mittels des Heizkörpers (20).

3. System (1) nach einem der vorhergehenden Ansprüche, **dadurch gekennzeichnet, dass** die Steuermittel (23) ferner angeordnet sind, um
∘die zweite Schaltung (7) über die Fluidverbindungsmittel (22b, 22c) mit der dritten Schaltung (14) zu verbinden,
o Aktivierung der zweiten Pumpe (8) und der dritten Pumpe (19) zur Kühlung des im zweiten Kreislauf (7) und im dritten Kreislauf (14) zirkulierenden Wärmeträgerfluids mittels des Heizkörpers (20).

4. System (1) nach einem der vorhergehenden Ansprüche, **dadurch gekennzeichnet, dass** die Ansteuermittel (23) ferner angeordnet sind, um die erste Schaltung (2), die zweite Schaltung (7) und die dritte Schaltung (14) über die Fluidverbindungsmittel (22a, 22b) voneinander zu isolieren.

5. Verfahren (100) zum Steuern eines Wärmemanagementsystems (1) eines Fahrzeugs mit einem Wärmeübertragungsfluid nach einem der vorhergehenden Ansprüche, wobei das Verfahren (100) die Schritte umfasst, die von der Steuereinrichtung (23) gesteuert werden, um, wenn das Fahrzeug steht und die Temperatur der elektrischen Energiespeichereinrichtung (6) unter einer minimalen Schwellentemperatur liegt,
∘die erste Schaltung (2) über die Fluidverbindungsmittel (22a, 22b, 22c) mit der zweiten Schaltung (3) zu verbinden (101),
∘Aktivierung (102) der ersten und zweiten Pumpe (3, 8) und
∘Aktivierung (103) der Heizvorrichtung (11) zum Erhitzen des Wärmeübertragungsmediums, das in den ersten und zweiten angeschlossenen Kreisläufen (2, 7) zirkuliert,
∘die erste Schaltung (2) über die Fluidverbindungsmittel (22a, 22c) mit der dritten Schaltung (14) zu verbinden (107),
o Deaktivierung (108) der dritten Pumpe (11), um einen Durchfluss des Wärmeübertragungsmediums durch den Kühler (20) zu verhindern, und
∘Aktivieren (109) der ersten Pumpe (3) zur Erwärmung des im ersten Kreislauf (2) zirkulierenden Wärmeträgermediums mittels einer Joule-Verlustrückgewinnung der rotierenden elektrischen Maschine (17).

6. Verfahren (100) nach Anspruch 5, das die folgenden Schritte umfasst, wenn sich das Fahrzeug bewegt und die Temperatur der elektrischen Energiespeichereinrichtung (6) oberhalb einer maximalen Schwellenwerttemperatur liegt:
o die erste Schaltung (2) über die Fluidverbindungsmittel (22a, 22c) mit der dritten Schaltung (14) zu verbinden (105),
o Aktivieren (106) der ersten Pumpe (3) und der dritten Pumpe (19), um das im ersten Kreislauf (2) und im dritten Kreislauf (14) zirkulierende Wärmeübertragungsmedium mittels des Heizkörpers (20) zu kühlen.

7. Verfahren (100) nach einem der Ansprüche 5 und 6, das die folgenden Schritte umfasst, wenn die Temperaturabweichung zwischen dem Fahrgastraum und der Außenseite des Fahrzeugs größer ist als eine Schwellentemperaturabweichung:
∘die zweite Schaltung (7) über die Fluidverbindungsmittel (22b, 22c) mit der dritten Schaltung (14) zu verbinden (110),
∘Aktivieren (111) der zweiten Pumpe (8) und der dritten Pumpe (19), um das im zweiten Kreislauf (7) und im dritten Kreislauf (14) zirkulierende Wärmeübertragungsmedium mittels des Heizkörpers (20) zu kühlen.

## Claims

1. System (1) for the thermal management of items of a vehicle by means of a heat transfer fluid, said system (1) comprising:
- first circuit (2) for thermal management of an electrical energy storage means comprising:
∘ first pump (3) for circulating said heat transfer fluid in said first circuit (2),
∘ means for storage of electrical energy (6),
- second circuit (7) for thermal management of an air heater for regulating the temperature of a passenger compartment, comprising:
∘ second pump (8) for the circulation of said heat transfer fluid in said second circuit (7),
∘heating device (11) for heating said heat transfer fluid,
∘an air heater (13),
- third circuit (14) for thermal management of a rotary electrical machine, said third circuit (14) comprising:
o rotating electrical machine (17),
o third pump (19) for the circulation of said heat transfer fluid in said third circuit (14),
o radiator (20) for cooling said heat transfer fluid,
- fluid connection means (22a, 22b, 22c) of said first circuit (2) with said second circuit (7), and being further arranged to connect said third circuit (14) with said first circuit (2) or said second circuit (7),
- control means (23) arranged to:
∘ connecting said first and second circuits (2, 7) via said fluid connection means (22a, 22b, 22c),
∘ activating said first pump 3 and said second pump 8,
∘ activating said heating device (11) to heat said heat transfer fluid circulating in said first and second connected circuits (2, 7).
**characterised in that** the control means (23) are further arranged to:
∘ connecting the first circuit (2) with the third circuit (14) via the fluid connection means (22a, 22c),
∘ deactivating the third pump (19) so as to prevent a passage of the heat transfer fluid into the radiator (20), and
∘ activating the first pump (3) so as to heat said heat transfer fluid circulating in said first circuit (2) by means of recovery of Joule losses from the rotary electrical machine (17).

2. System (1) according to claim 1, **characterised in that** said control means (23) are further arranged to:
∘ connecting the first circuit (2) with the third circuit (14) via the fluid connection means (22a, 22c);
∘ activating the first pump (3) and the third pump (19) so as to cool the heat transfer fluid circulating in said first circuit (2) and said third circuit (14) by means of the radiator (20).

3. System (1) according to one of the previous claims, **characterised in that** the control means (23) are further arranged to
∘ connecting the second circuit (7) with the third circuit (14) via the fluid connection means (22b, 22c),
∘ activate the second pump (8) and the third pump (19) so as to cool the heat transfer fluid circulating in said second circuit (7) and said third circuit (14) by means of the radiator (20).

4. System (1) according to one of the previous claims, wherein the control means (23) are further arranged to isolate the first circuit (2), the second circuit (7) and the third circuit (14) from each other via the fluid connection means (22a, 22b).

5. method (100) for controlling a system (1) for thermal management of a vehicle by means of a heat transfer fluid according to any one of the previous claims, said method (100) comprising the steps controlled by the control means (23) of, when the shutdown is in a state and the temperature of the electrical energy storage means (6) is below a minimum threshold temperature,
∘ connecting (101) the first circuit (2) with the second circuit (3) via the fluid connection means (22a, 22b, 22),
∘ activating (102) the first and second pumps (3, 8), and
∘ activating (103) the heating device (11) to heat the heat transfer fluid circulating in said first and second connected circuits (2, 7),
∘ connecting (107) the first circuit (2) with the third circuit (14) via the fluid connection means (22a, 22c),
∘ deactivating (108) the third pump (11) so as to prevent a passage of the heat transfer fluid into the radiator (20), and
∘ activating (109) the first pump (3) so as to heat the heat transfer fluid circulating in the first circuit (2) by means of a recovery of Joule losses of the rotary electrical machine (17).

6. Method (100) according to claim 5, comprising the steps of, when the vehicle is in motion and the temperature of the electrical energy storage means (6) is above a maximum threshold temperature:
∘ connecting (105) the first circuit (2) with the third circuit (14) via the fluid connection means (22a, 22c),
∘ activate (106) the first pump (3) and the third pump (19) so as to cool the heat transfer fluid circulating in the first circuit (2) and the third circuit (14) by means of the radiator (20).

7. Method (100) according to one of Claims 5 and 6, comprising the steps of, when the temperature variance between the passenger compartment and the outside of the vehicle is greater than a threshold temperature variance:
∘ connecting (110) the second circuit (7) with the third circuit (14) via the fluid connection means (22b, 22c),
∘ activate (111) the second pump (8) and the third pump (19) so as to cool the heat transfer fluid circulating in the second circuit (7) and the third circuit (14) by means of the radiator (20).
